# EUROPÄISCHE PATENTSCHRIFT

(11) **EP 1 116 728 B1**
(45) Veröffentlichungstag und Bekanntmachung des Hinweises auf die Patenterteilung: **11.01.2006**
(21) Anmeldenummer: 01100003.1
(22) Anmeldetag: 03.01.2001
(51) Int. Cl.: C08B 11/20

(54) **Kontinuierliches Verfahren und Vorrichtung zur Trocknung und Gelbildung von lösungsmittelhaltigen gelbildenden Polymeren**
Continuous process and apparatus for drying and gel formation of gelable and solvent containing polymers
Procédé continu et dispositif pour le séchage et la formation de gel à partir de polymères gélifiables et contenant des solvants

(30) Priorität: 14.01.2000 DE 10001256
(43) Veröffentlichungstag der Anmeldung: 18.07.2001
(73) Patentinhaber: Wolff Cellulosics GmbH & Co.KG, 29699 Bomlitz (DE)
(72) Erfinder: Gehrmann, Dietrich, Dr., 51381 Leverkusen (DE); Kempkes, Hartwig, 51766 Engelskirchen (DE)

(56) Entgegenhaltungen:
- WO-A-98/31710
- DE-C- 952 264
- GB-A- 2 262 527
- US-A- 2 331 864
- US-A- 5 662 840

## Beschreibung

Die Erfindung betrifft ein kontinuierliches Verfahren zur Trocknung und Gelbildung von lösungsmittelhaltigen gelbildenden Polymeren, insbesondere Polysaccharidderivaten, durch Flashkühlung von Suspensionen der Polymere sowie eine Vorrichtung zum Trocknen lösungsmittelhaltiger Produkte.

Das Verfahren umfasst die Schritte: Eindosieren des lösungsmittelhaltigen Polymeren mit einem Feststoffgehalt von 1 bis 65 Gew.-% und einem Druck von insbesondere Umgebungsdruck bis 6000 hPa, mit einer Temperatur des Polymeren von 20 bis 100°C in eine Verdampfungszone, wobei die Verdampfungszone einen Druck von 0,1 hPa bis 800 hPa aufweist, Abkühlen des Polymeren, Befreien des Polymeren von Lösungsmittel um 2 bis 5 Gew.-% unter mechanischem Rühren, Mischen und Fördern der Mischung zum unteren Ende der Verdampfungszone unter Bildung einer dichten vergelten Produktschicht, Austragen des Polymeren mit einer mechanischen Austragsvorrichtung, ggf. unter weiterer Verdichtung des Polymeren und anschließende Trocknung des vergelten Polymeren in einer Trockenvorrichtung auf einen Gehalt an Lösungsmittel von höchstens 5 Gew.-%.

Die beschriebene Vorrichtung besteht wenigstens aus einem Verdampfungsbehälter mit einer Verdampfungszone, einem Rührwerk und einer Fördereinrichtung, einem Produkteinlass, einem Brüdenabzug mit angeschlossenem Vakuumerzeuger, einer am unteren Ende des Verdampfungsbehälters angeschlossenen Austragsvorrichtung, wobei in der untersten Ebene der Fördereinrichtung eine oder mehrere Förderschaufeln mit Pressflügeln vorgesehen sind, die den Eingang der Austragsvorrichtung in einer Höhe von höchstens 5 mm, vorzugsweise 1 bis 3 mm überstreichen.

GB-A 2 262 527 offenbart ein Verfahren zur Trocknung und Mahlung von Cellulosederivaten, das einen Vergelungs- und Abkühlungsschritt umfasst. Eine Abkühlung unter vermindertem Druck wird aber nicht offenbart.

US 2,331,864 offenbart ein Verfahren zur Herstellung von Celluloseethern, das einen Abkühlungsschritt durch das Blasen eines Luftstroms über das feuchte Produkt umfasst. Eine Abkühlung unter vermindertem Druck wird auch hier nicht offenbart.

US 5,662,840 betrifft ein Verfahren zur Herstellung von Mikrokügelchen aus Hydrokolloidgel, in dem eine Abkühlung durch das Zerstäuben durch eine Zweistoffdüse unter Überdruck erfolgt.

In der Offenlegungsschrift DE 196 02 227 A1 ist ein Vorratsbehälter (Pastenbunker) mit Austragsvorrichtung bekannt. Insbesondere ist das Rührwerk des Vorratsbehälters in Hülsenbauform mit variabler Rührarmgeometrie zur Anpassung an die Produktkonsistenz beschrieben.

Aus der Patentschrift DE 952 264 ist ein dreistufiges Verfahren zur Überführung feuchter, faseriger Methylcellulose in die Pulverform von hoher Lösegeschwindigkeit bekannt. Hierbei wird das 50 bis 70 Gew.-% Wasser enthaltende Produkt zuerst zu einer plastischen Masse homogenisiert und auf 10 bis 20°C gekühlt, wobei man sich einer gekühlten Schneckenpresse bedient; anschließend wird die Masse mit einer Hammermühle gemahlen und in einem Umlufttrockner getrocknet.

Aufgabe der Erfindung ist es ein Verfahren und eine Vorrichtung bereitzustellen, die die Nachteile der bekannten Verfahren und Vorrichtungen vermeiden und eine vergleichbar sichereren kontinuierlichen Betrieb ermöglichen.

Für die Trocknung und für die Mahlbarkeit der Celluloseether in einem Mahltrockner, ist eine vorherige Vergelung der Celluloseether notwendig.

Der Erfindung liegt daher insbesondere die Aufgabe zu Grunde, ein Trocknungsverfahren zu entwickeln, welches für lösungsmittelhaltige gelbildende Polysaccharidderivate, insbesondere für Celluloseether- Suspension geeignet ist, wobei die Celluloseether-Suspension abzukühlen ist, um eine Vergelung zu bewirken und das Gel kontinuierlich in eine nachgeschaltete Apparatur, insbesondere in einen Mahltrockner, zu dosieren.

Insbesondere muss eine Celluloseether-Suspension in eine homogene, gelförmige Konsistenz überführt werden können um die Masse in einen Heißdampfmahltrockner dosieren zu können.

Die Aufgabe wird erfindungsgemäß dadurch gelöst, dass die vorerhitzte Polymer-Suspension in eine Verdampfungszone eingeleitet wird und sich die Verdampfungszone, z.B. ein zylindrischer Behälter, unter einem abgesenktem Systemdruck befindet und die Polymer-Suspension durch das Einflashen in den zylindrischen Behälter einen Kühleffekt bis unterhalb des Flockpunktes erfährt.

Gegenstand der Erfindung ist ein kontinuierliches Verfahren zur Trocknung und Gelbildung von lösungsmittelhaltigen gelbildenden Polymeren, insbesondere Polysaccharid-derivaten, insbesondere bevorzugt von heißen, wässrigen Celluloseether-Suspensionen, durch Flashkühlung (schlagartige Entspannung unter Abkühlung) von Suspensionen der Polymere, mit den Schritten:
Eindosieren des lösungsmittelhaltigen Polymeren mit einem Feststoffgehalt von 1 bis 65 Gew.-%, bevorzugt von 5 bis 50 Gew.-%, besonders bevorzugt von 10 bis 40 Gew.-%, bei einem Druck von insbesondere Umgebungsdruck bis 6000 hPa, mit einer Temperatur des Polymeren von 20 bis 100°C, bevorzugt von 30 bis 95°C, in eine Verdampfungszone, bevorzugt einen Pastenbunker, wobei die Verdampfungszone einen Druck von 0,1 hPa bis 800 hPa, bevorzugt von 20 hPa bis 700 hPa, besonders bevorzugt von 40 hPa bis 200 hPa aufweist, Abkühlen des Polymeren, insbesondere auf eine Temperatur von <93°C, insbesondere <60°C, insbesondere von 60°C bis 29°C, Befreien des Polymeren von Lösungsmittel um 2 bis 5 Gew.-% unter mechanischem Rühren, Mischen und Fördern der Mischung zum unteren Ende der Verdampfungszone unter Bildung einer dichten vergelten Produktschicht, Austragen des Polymeren mit einer mechanischen Austragsvorrichtung, insbesondere mit Hilfe eines ein- oder mehrwelligen Schneckenförderers, ggf. unter weiterer Verdichtung des Polymeren und anschließende Trocknung des vergelten Polymeren in einer Trockenvorrichtung auf einen Gehalt an Lösungsmittel von höchstens 5 Gew.-%.

Die Verweilzeit des Polymeren in der Verdampfungszone beträgt bevorzugt von 30 sek, bis 2h, besonders bevorzugt von 5 bis 30 min.

Bevorzugt erfolgt die Trocknung des vergelten Polymeren bei 100 bis 500°C, besonders bevorzugt von 100 bis 230°C in einem Mahltrockner.

Vorteilhafterweise wird die Trocknung des vergelten Polymeren besonders bei einem Druck von etwa 1000 hPa (d.h. Umgebungsdruck) bis 5000 hPa, bevorzugt bei 1000 hPa durchgeführt.

Besondere Vorteile ergeben sich wenn die Trocknung des vergelten Polymeren in einem Heißdampfmahltrockner erfolgt.

Vorzugsweise erfolgt die Trocknung des vergelten Polymeren bis auf einen Gehalt an Lösungsmittel von höchstens 4 Gew.-%.

Das im Verfahren besonders bevorzugt einzusetzende Polymere ist ein Celluloseether, insbesondere Methylcellulose.

Das im Verfahren verwendete Lösungsmittel ist bevorzugt im wesentlichen Wasser.

Die Erfindung zeichnet sich dem Stand der Technik gegenüber, insbesondere dem in der Patentschrift DE 952 264 beschriebenen, dadurch aus, dass die Abkühlung der Polymer-Suspension nicht durch Kontaktkühlung der Suspension sondern durch den Flasheffekt, d.h. beim Übergang vom höheren Druckniveau in der Suspensionsleitung zum abgesenkten Systemdruck im Pastenbunker (Verdampfungszone), vollzieht. Dieser Vorgang läuft im Gegensatz zur Schneckenpresse spontan unter gleichzeitiger Aufkonzentrierung der Polymer -Suspension ab. Die weitere Vergelung wird, wie im vorliegenden Patent beschrieben, durch die angebotene Verweilzeit im Pastenbunker erreicht. Der Pastenbunker hat im Gegensatz zur Schneckenpresse zusätzlich die wünschenswerte Funktion eines Zwischenpuffers. Die Vergelung des Polymeren (Methylcellulose) findet laut der Lehre der Patentschrift DE 952 264 bei einer Temperatur von 10 bis 20°C statt, im vorliegenden Verfahren jedoch bei wesentlich höherer Temperatur, jedoch bei typischerweise < 60°C.

Weiterer Gegenstand der Erfindung ist eine Vorrichtung zur Trocknung lösungsmittelhaltiger Produkte, insbesondere von lösungsmittelhaltigen gelbildenden Polymeren, bestehend wenigstens aus einem Verdampfungsbehälter mit einer Verdampfungszone, einem Rührwerk und einer Fördereinrichtung, einem Produkteinlass, einem Brüdenabzug mit angeschlossenem Vakuumerzeuger, einer am unteren Ende des Verdampfungsbehälters angeschlossenen Austragsvorrichtung, wobei in der untersten Ebene der Fördereinrichtung eine oder mehrere Förderschaufeln mit Pressflügeln vorgesehen sind, die den Eingang der Austragsvorrichtung in einer Höhe von höchstens 5 mm, vorzugsweise 1 bis 3 mm überstreichen.

Bevorzugt ist die Austragsvorrichtung ein ein- oder mehrwelliger Schneckenförderer.

Der Verdampfungsbehälter weist eine zusätzliche Ummantelung für die Durchleitung eines Wärmeträgermediums auf um die Entgasung des Polymeren zusätzlich zu fördern.

In einer besonders bevorzugten Variante der Vorrichtung überstreichen die Pressflügel den Eingang der Austragsvorrichtung in einer Höhe von höchstens 5 mm, vorzugsweise 1 bis 3 mm, um eine vollständige Füllung der Schneckengänge zu gewährleisten. Damit wird eine gleichmäßige Produktförderung und gleichzeitig ein dichter Verschluss zwischen Pastenbunker und Mahltrockner erreicht.

In einer bevorzugten Ausbildung der Vorrichtung ist vor dem Produkteinlass eine Drosseleinrichtung, insbesondere ein Drosselventil zur Aufrechterhaltung des verminderten Druckes im Verdampfungsbehälter angebracht.

Als Austragsvorrichtung hat sich ein Vollblattschneckenförderer besonders bewährt.

Die erfindungsgemäße Vorrichtung eignet sich besonders zur Durchführung des oben beschriebenen erfindungsgemäßen Verfahrens.

Gegenüber der aus der Schrift DE 196 02 227 A1 bekannten Anordnung hat der Pastenbunker in der Vorrichtung gemäß der Erfindung für die Dosierung des Polymer-Gels insbesondere ein jeweils zusätzlich angeschraubtes Pressteil an den unteren Armen.

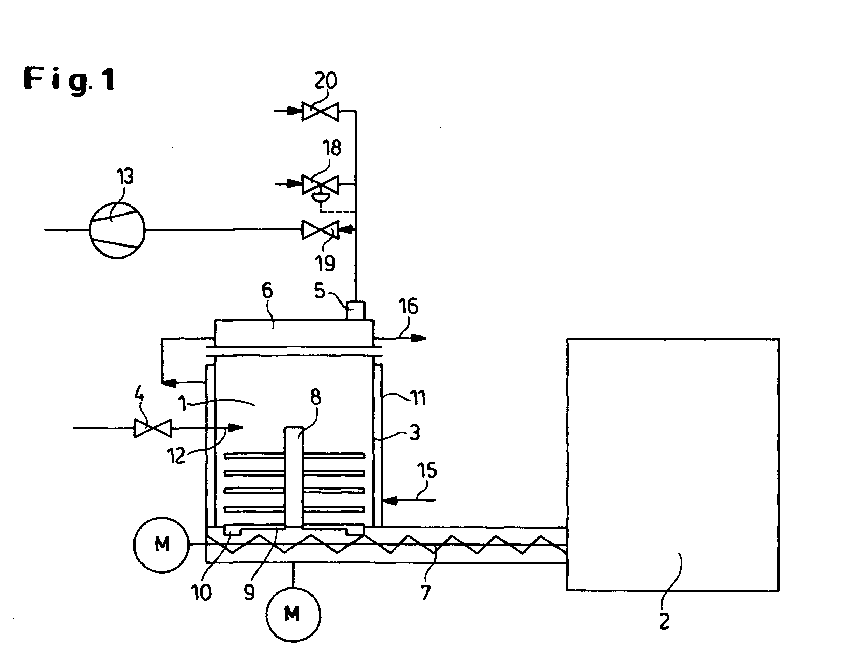

Der in Figur 1 gezeigte bevorzugte Pastenbunker ermöglicht die gasdichte kontinuierliche Dosierung in eine nachgeschaltete Trockenapparatur. Diesen Vorteil macht sich die Flashkühlung zu nutze um lösungsmittelhaltige Polymere, insbesondere Polysaccharidderivate, insbesondere bevorzugt Celluloseether-Suspension mit einem Feststoffgehalt von 1 bis 65 Gew.-%, bevorzugt von 5 bis 50 Gew.-%, besonders bevorzugt von 10 bis 40 Gew.-%, in den unter einem Druck von 0,1 hPa bis 800 hPa, bevorzugt von 20 hPa bis 700 hPa, besonders bevorzugt von 40 hPa bis 500 hPa stehenden zylindrischen Behälter über ein einstellbares Ventil kontinuierlich einzuflashen (zu entspannen).

Der Flasheffekt tritt spontan beim Eintritt der Suspension in die Verdampfungszone auf, wenn die Suspensionstemperatur oberhalb der zum Systemdruck gehörenden Sattdampftemperatur des Lösungsmittels liegt. Der Systemdruck wird insbesondere für Celluloseether so gewählt, dass die Sattdampftemperatur < 60°C (unterhalb des Flockpunktes) liegt. Die beim Flasheffekt (Entspannungsverdampfung) entstehenden Brüden verlassen über einen Stutzen im Deckel des zylindrischen Behälters den Pastenbunker. Es tritt bevorzugt eine Aufkonzentrierung der Suspension von 2 bis 5 % sowie eine Kühlung der Polymere <60°C insbesondere von 60°C bis 29°C auf. Zur Vermeidung von Kondensation der Brüden an der zylindrischen Außenwand kann diese bevorzugt über einen Doppelmantel beheizbar gestaltet werden. Um einen zusätzlichen Kühleffekt nach dem Flashvorgang zu erreichen, kann der Doppelmantel insbesondere auch gekühlt werden, wobei der Effekt der Aufkonzentrierung durch das Einflashen der Lösung infolge teilweiser Kondensation vermindert wird.

Der Pastenbunker liefert eine ausreichende, über die Füllhöhe einstellbare Verweilzeit, um eine vollständige Vergelung zu gewährleisten, bevor das Gel durch die Förderschnecke den Pastenbunker verlässt. Das schwer dosierbare Produkt, insbesondere Celluloseether-Gel, wird mit Hilfe eines Rührwerks und den insbesondere an der untersten Rührebene angebrachten Pressteilen der Förderschnecke zugeführt.

Der Pastenbunker ermöglicht durch seine Konstruktion die Gasdichtheit gegenüber nachfolgenden Apparaturen, insbesondere gegenüber einem Heißdampf-Trocknungsschritt, so dass durch den Zustand des abgesenkten Systemdrucks im Bunker das kontinuierliche Flashen der heißen Celluloseether-Suspension unter gleichzeitigem Abkühlen auf die zum Systemdruck gehörende Sattdampftemperatur gegeben ist. Der Systemdruck wird so niedrig eingestellt, dass die Sattdampftemperatur unterhalb des Flockpunktes der Celluloseether-Suspension liegt. Gleichzeitig wird eine Aufkonzentrierung der Suspension durch den Flasheffekt erreicht. Beim Abkühlen wird ein homogenes Gel erzeugt. Die Verweilzeit für eine vollständige Vergelung ist im Bunker einstellbar. Der Pastenbunker erfüllt gleichzeitig die Aufgabe der Dosierung des Gels in den Heißdampfmahltrockner.

Der Einsatz eines Pastenbunkers mit einem modifizierten Hülsenrührwerk ist besonders geeignet für die Lösung der technischen Aufgaben (schonende Gelbildung) der Erfindung. Die Abkühlung der heißen Polymer-Suspension wird durch das "Einflashen" in den unter Vakuum stehenden Pastenbunker, z.B. bei < 200 mbar, erzielt. Gleichzeitig tritt eine Aufkonzentrierung der Celluloseether-Suspension und eine Vergelung ein. Entstehende Brüden werden über den Brüdenstutzen im Deckel des Pastenbunkers abgezogen. Die Vergelung ist durch eine ausreichende, über den Füllstand im Pastenbunker einstellbare Verweilzeit des Produktes gegeben. Die vorzugsweise eingesetzte Vollblattschnecke dosiert das Gel in den nachgeschalteten Mahltrockner, insbesondere in einen Heißdampfmahltrockner (HDMT).

Die Ausführung der Rührarme, insbesondere der unteren Ebene, kann bevorzugt dem Förderverhalten des Produktes angepasst werden und ist umso wichtiger für die Gewährleistung einer gasdichten, kontinuierlichen, gleichmäßigen Dosierung.

Die Einspeisestelle für die Suspension in den Pastenbunker erfolgt bevorzugt vornehmlich tangential in den Pastenbunker zur guten Trennung der Suspension von den Brüden. Das Einflashen kann aber auch insbesondere über den Deckel des Pastenbunkers erfolgen. Die Höhe der Einspeisestelle ist variabel ausführbar. Zur Vermeidung der Kondensation der Brüden kann der Pastenbunker wie beschrieben über einen Doppelmantel beheizt werden. Zur Unterstützung des Kühleffektes beim Einflashen der Suspension kann der Pastenbunker über den Doppelmantel gekühlt werden. Die erreichbare Aufkonzentrierung wird in diesem Fall durch kondensierende Brüden vermindert.

Mit der Erfindung werden unter anderem folgende Vorteile erzielt:
1. Schonende Kühlung/Trocknung von Suspensionen insbesondere von lösungsmittelhaltigen gelbildenden Polysaccharidderivate, insbesondere Celluloseether-Suspension durch Flasheffekt.
2. Kühlung von lösungsmittelhaltigen, gelbildenden Polysaccharidderivate, insbesondere der Celluloseether-Suspension unter Flockpunkt.
3. Trennung der entstehenden Brüden von der kontinuierlich eingeflashten Suspension.
4. Ausreichende durch den variablen Füllstand im Pastenbunker einstellbare Verweilzeit für die Vergelung.
5. Entstehung eines homogenen Gels beim Abkühlen und Vergelen.
6. Kontinuierliche gasdichte Dosierung aus dem Pastenbunker in die nachfolgende Trockenapparatur insbesondere in einen Heißdampfmahltrockner.
7. An die Produktkonsistenz anpassbare Rührwerksgeometrie zur Gewährleistung einer konstanten gasdichten Dosierung.

Die Erfindung wird nachfolgend anhand der Figuren durch die Beispiele, welche jedoch keine Beschränkung der Erfindung darstellen, weiter erläutert.

Es zeigen:
- Fig. 1: die schematische Darstellung des Flasheintrags des Polymeren

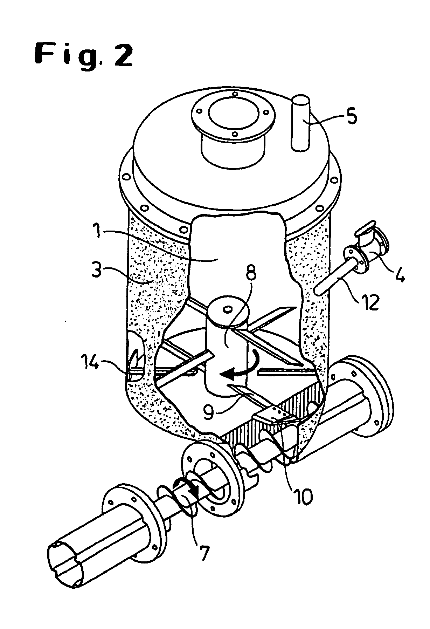

- Fig.2: den grundsätzlichen Aufbau des bevorzugt eingesetzten Pastenbunkers

### Beispiele:

### Allgemeine Beschreibung

Eine im Feuchtgutmischer (nicht gezeichnet) angesetzte Methylcellulose-Suspension wird mit Hilfe einer Mohnopumpe (nicht gezeichnet) kontinuierlich in den unter einem abgesenkten Systemdruck stehenden Pastenbunker 1 dosiert. Der Füllstand im Pastenbunker 1 wird durch Anpassen der Mohnopumpendrehzahl an den durch die Förderschnecke 7 eingestellten Geldurchsatz konstant gehalten. Die Förderschnecke 7 des Pastenbunkers 1 fördert das Gel in den Heißdampfinahltrockner 2 (Typ Ultra-Rotor II, Hersteller Fa. Jaeckering) und wird dort getrocknet und gemahlen. Die beim Einflashen der Methylcellulose-Suspension entstehenden Brüden werden mit Hilfe einer Vakuumpumpe 13 über ein Ventil 19 und den Stutzen 5 im Deckel 6 des Pastenbunkers 1 abgesaugt. Der Systemdruck im Pastenbunker 1 wird mit einem Druckhalteventil 18 eingestellt und konstant gehalten. An der gleichen Zuleitung ist auch noch ein Belüftungsventil 20 angebracht. Um einen Vakuumdurchschlag in die Suspensionsleitung 12 und ein Vergelen der Suspension mit der Gefahr der Verstopfung der Suspensionsleitung 12 zu vermeiden, ist ein Kugelhahn 4 vor Eintritt in den zylindrischen Teil des Pastenbunkers 1 installiert. Der Einlass ist tangential zum Gehäuseumfang angeordnet. Der Druck in der Suspensionsleitung 12 wird durch Einstellung des Kugelhahns 4 auf > 100 mbar Überdruck eingestellt. Ein Einlass 15 und ein Auslass 16 für ein Wärmeträgerfluid sind am Pastenbunker 1 vorgesehen.

### Ausführungsbeispiel

Das Rührwerk 8 des Pastenbunker 1 ist mit vier nach unten pressend angestellten Rührebenen und drei in der zylindrischen Wand 3 befestigten Gegenhaltern 14, die ein Mitrotieren des Produktes mit dem Rührwerk 8 verhindern, bestückt. Die untersten beiden Rührarme 9 der untersten Rührebene sind zusätzlich im Außenbereich auf einer Länge die der Schneckentrogbreite entspricht, mit einem keilförmigen Pressteil 10 ausgerüstet. Diese Pressteile 10 haben einen Bodenabstand von 2 mm und gewährleisten ein kontinuierliches Zudosieren des Produktes zur Förderschnecke 7 durch das Rührwerk 8.

Eine 82°C warme 21 Gew.-%ige Methylcellulose-Suspension (Produkt MT 40000, Hersteller Wolff-Walsrode GmbH) wurde mit Hilfe einer Mohnopumpe kontinuierlich in den Pastenbunker 1 eingeflasht (dosiert). Der Systemdruck im Pastenbunker 1 betrug 130 mbar. Der Druck in der Suspensionsleitung 12 wurde mit Hilfe des Kugelhahns 4 auf 3 bar Überdruck eingestellt. Der Doppelmantel 11 des Pastenbunkers 1 wurde nicht beheizt und nicht gekühlt. Die Konzentration der Methylcellulose-Suspension stieg im Feuchtgutmischer durch Ausdampfen von Wasser auf 23,5 Gew.-% an.

Es wurden Feuchtgutdurchsätze im Bereich von 57 bis 165 kg/h Suspension gefahren. Die Verweilzeit im Pastenbunker 1 betrug 14 min bei niedrigem bzw. 6 min bei hohem Durchsatz. Die Aufkonzentrierung durch das Einflashen beträgt ca. 0,054 kg Lösungsmittel pro kg Suspension. Die Rührwerksdrehzahl wurde mit Erhöhen des Durchsatzes von 15 auf 27 Upm und die Förderschneckendrehzahl von 12 auf 28 Upm angehoben. Die Förderschnecke 7 förderte das Gel in den Mahltrockner 2. Durch Anheben der Heißdampfeintrittstemperatur in den Mahltrockner 2 von 133 bis 181°C beim hohen Durchsatz wurde die Heißdampfaustrittstemperaturen von 120°C konstant gehalten. Das getrocknete Produkt wies eine Restfeuchte von 2% auf. Der Systemdruck am Eintritt des Heißdampfes in den Mahltrockner 2 betrug 10 mbar Überdruck, am Austritt des Trockners 2 10 mbar Unterdruck. Die Drehzahl des Mahltrockners 2 war auf 1063 Upm eingestellt.

## Patentansprüche

1. Kontinuierliches Verfahren zur Trocknung und Gelbildung von lösungsmittelhaltigen gelbildenden Polymeren, insbesondere Polysaccharid-derivaten, insbesondere bevorzugt von heißen, wässrigen Celluloseether-Suspensionen, mit den Schritten:
Eindosieren des lösungsmittelhaltigen Polymeren mit einem Feststoffgehalt von 1 bis 65 Gew.-% bei einem Druck von Umgebungsdruck bis 6000 hPa, mit einer Temperatur des Polymeren von 20 bis 100°C in eine Verdampfungszone (1), wobei die Verdampfungszone (1) einen Druck von 0,1 hPa bis 800 hPa aufweist, Abkühlen durch Flashkühlung der Suspensionen der Polymeren auf eine Temperatur von <93°C, Befreien des Polymeren von Lösungsmittel um 2 bis 5 Gew.-% unter mechanischem Rühren, Mischen und Fördern der Mischung zum unteren Ende der Verdampfungszone (1) unter Bildung einer dichten vergelten Produktschicht, Austragen des Polymeren mit einer mechanischen Austragsvorrichtung (7), ggf. unter weiterer Verdichtung des Polymeren und anschließende Trocknung des vergelten Polymeren in einer Trockenvorrichtung auf einen Gehalt an Lösungsmittel von höchstens 5 Gew.-%.

2. Verfahren nach Anspruch 1, **dadurch gekennzeichnet, dass** die Verweilzeit des Polymeren in der Verdampfungszone (1) von 30 sek. bis 2h beträgt.

3. Verfahren nach Anspruch 1 oder 2, **dadurch gekennzeichnet, dass** die Trocknung des vergelten Polymeren bei 100 bis 500°C in einem Mahltrockner erfolgt.

4. Verfahren nach einem der Ansprüche 1 bis 3, **dadurch gekennzeichnet, dass** die Trocknung des vergelten Polymeren bei einem Druck von 1000 bis 5000 hPa erfolgt.

5. Verfahren nach einem der Ansprüche 1 bis 4, **dadurch gekennzeichnet, dass** die Trocknung des vergelten Polymeren in einem Heißdampfmahltrockner erfolgt.

6. Verfahren nach einem der Ansprüche 1 bis 5, **dadurch gekennzeichnet, dass** die Trocknung des vergelten Polymeren bis auf einen Gehalt an Lösungsmittel von höchstens 4 Gew.-% erfolgt.

7. Verfahren nach einem der Ansprüche 1 bis 5, **dadurch gekennzeichnet, dass** das Lösungsmittel im wesentlichen Wasser ist.

8. Verfahren nach einem der Ansprüche 1 bis 5, **dadurch gekennzeichnet, dass** das Polymere ein Celluloseether, insbesondere Methylcellulose, ist.

9. Vorrichtung zur Trocknung von lösungsmittelhaltigen gelbildenden Polymeren durch Flashkühlung der Suspensionen der Polymeren, bestehend wenigstens aus einem Verdampfungsbehälter (3) mit einer Verdampfungszone (1), einem Rührwerk und einer Fördereinrichtung (8), einem Produkteinlass (12), wobei vor dem Produkteinlass (12) eine Drosseleinrichtung (4) zur Aufrechterhaltung des verminderten Druckes im Verdampfungsbehälter (3) angebracht ist, einem Brüdenabzug (5) mit angeschlossenem Vakuumerzeuger, einer am unteren Ende des Verdampfungsbehälters (3) angeschlossenen Austragsvorrichtung (7), wobei in der untersten Ebene der Fördereinrichtung (8) eine oder mehrere Förderschaufeln (9) mit Pressflügeln (10) vorgesehen sind, die den Eingang der Austragsvorrichtung (7) in einer Höhe von höchstens 5 mm, insbesondere 1 bis 3 mm, überstreichen.

10. Vorrichtung nach Anspruch 9, **dadurch gekennzeichnet, dass** die Austragsvorrichtung (7) ein ein- oder mehrwelliger Schneckenförderer (7) ist.

11. Vorrichtung nach Anspruch 9 oder 10, **dadurch gekennzeichnet, dass** der Verdampfungsbehälter (3) eine zusätzliche Ummantelung (11) für die Durchleitung eines Wärmeträgermediums aufweist.

12. Vorrichtung nach einem der Ansprüche 9 bis 11, **dadurch gekennzeichnet, dass** die Pressflügel (10) den Eingang der Austragsvorrichtung (7) in einer Höhe von höchstens 2 mm überstreichen.

## Revendications

1. Procédé continu pour le séchage et la gélification de polymères gélifiables contenant des solvants, en particulier des dérivés de polysaccharide et tout spécialement des suspensions aqueuses chaudes d'éthers cellulosiques, comprenant les stades opératoires suivants :
envoi du polymère contenant un solvant à une teneur en matières solides de 1 à 65 % en poids sous une pression allant de la pression ambiante jusqu'à 6 000 hPa et à une température du polymère de 20 à 100°C, dans une zone de vaporisation (1) dans laquelle règne une pression de 0,1 hPa à 800 hPa, refroidissement par détente brutale de la suspension du polymère jusqu'à une température inférieure à 93°C, élimination en proportion de 2 à 5 % en poids du solvant contenu dans le polymère sous agitation mécanique, mélange et transport du mélange vers l'extrémité inférieure de la zone de vaporisation (1) avec formation d'une couche de produit gélifié dense, élimination du polymère à l'aide d'un dispositif d'évacuation (7), éventuellement avec nouvelle concentration du polymère puis séchage du polymère gélifié dans un appareil de séchage jusqu'à une teneur en solvant de 5 % en poids au maximum.

2. Procédé selon la revendication 1, **caractérisé en ce que** la durée de passage du polymère dans la zone de vaporisation (1) est de 30 s à 2 h.

3. Procédé selon la revendication 1 ou 2, **caractérisé en ce que** le séchage du polymère gélifié est réalisé dans un broyeur-sécheur à des températures de 100 à 500°C.

4. Procédé selon l'une des revendications 1 à 3, **caractérisé en ce que** le séchage du polymère gélifié est réalisé sous une pression de 1 000 à 5 000 hPa.

5. Procédé selon l'une des revendications 1 à 4, **caractérisé en ce que** le séchage du polymère gélifié est réalisé dans un broyeur-sécheur chauffé à la vapeur.

6. Procédé selon l'une des revendications 1 à 5, **caractérisé en ce que** le polymère gélifié est séché jusqu'à une teneur en solvant de 4 % en poids au maximum.

7. Procédé selon l'une des revendications 1 à 5, **caractérisé en ce que** le solvant consiste essentiellement en eau.

8. Procédé selon l'une des revendications 1 à 5, **caractérisé en ce que** le polymère est un éther cellulosique et consiste plus spécialement en méthylcellulose.

9. Appareillage pour le séchage de polymères gélifiables contenant des solvants par refroidissement dû à une détente brutale des suspensions des polymères, cet appareillage consistant en au moins un récipient de vaporisation (3) comportant lui-même une zone de vaporisation (1), un dispositif d'agitation et un dispositif transporteur (8), une admission de produit (12) précédée d'un dispositif d'étranglement (4) permettant de maintenir une basse pression dans le récipient de vaporisation (3), un dispositif d'évacuation des vapeurs (5) relié à un appareil produisant le vide, un dispositif d'évacuation (7) relié à l'extrémité inférieure du récipient de vaporisation (3), les plans les plus bas du dispositif transporteur (8) comportant une ou plusieurs pales transporteuses (9) à ailettes refoulantes (10), qui frottent l'entrée au dispositif d'évacuation (7) en le dépassant de 5 mm au maximum et plus spécialement de 1 à 3 mm.

10. Appareillage selon la revendication 9, **caractérisé en ce que** le dispositif d'évacuation (7) consiste en un appareil transporteur à vis à un ou plusieurs axes (7).

11. Appareillage selon la revendication 9 ou 10, **caractérisé en ce que** le récipient de vaporisation (3) porte en outre une double enveloppe (11) pour passage d'un milieu échangeur de chaleur.

12. Appareillage selon l'une des revendications 9 à 11, **caractérisé en ce que** les ailettes (10) frottent l'entrée au dispositif d'évacuation (7) en le dépassant de 2 mm au maximum.

## Claims

1. A continuous process for the drying and gelation of solvent-containing, gel-forming polymers, in particular polysaccharide derivatives, in particular preferably of hot, aqueous cellulose ether suspensions comprising the steps:
apportioning the solvent-containing polymer with a solids content of 1 to 65 wt.% at a pressure from ambient pressure to 6000 hPa, with a polymer temperature of 20 to 100°C into a vaporisation zone (1), wherein the vaporisation zone (1) exhibits a pressure of 0.1 hPa to 800 hPa, cooling the polymer suspensions by flash cooling to a temperature of <93°C, reducing the solvent content of the polymer by 2 to 5 wt.% with mechanical stirring, mixing and conveying of the mixture to the lower end of the vaporisation zone (1), so forming a compact, gelled product layer, discharging the polymer with a mechanical discharge apparatus (7), optionally with further compaction of the polymer and subsequent drying of the gelled polymer in a drying apparatus down to a solvent content of at most 5 wt.%.

2. A process according to claim 1, **characterised in that** the residence time of the polymer in the vaporisation zone (1) is from 30 sec to 2 h.

3. A process according to claim 1 or claim 2, **characterised in that** the gelled polymer is dried at 100 to 500°C in a dryer-pulveriser.

4. A process according to any one of claims 1 to 3, **characterised in that** the gelled polymer is dried at a pressure of 1000 to 5000 hPa.

5. A process according to any one of claims 1 to 4, **characterised in that** the gelled polymer is dried in a superheated steam dryer-pulveriser.

6. A process according to any one of claims 1 to 5, **characterised in that** the gelled polymer is dried down to a solvent content of at most 4 wt.%.

7. A process according to any one of claims 1 to 5, **characterised in that** the solvent is substantially water.

8. A process according to any one of claims 1 to 5, **characterised in that** the polymer is a cellulose ether, in particular methylcellulose.

9. An apparatus for drying solvent-containing, gel-forming polymers by flash cooling the suspensions of the polymers, at least consisting of a vaporisation vessel (3) with a vaporisation zone (1), a stirrer and a conveying device (8), a product inlet (12), a throttle valve (4) for maintaining the reduced pressure in the vaporisation vessel (3) being arranged upstream from the product inlet (12), a vapour outlet (5) with connected vacuum generator, a discharge apparatus (7) connected at the lower end of the vaporisation vessel (3), one or more conveying blades (9) with press paddles (10) being provided in the lowermost plane of the conveying device (8) which pass over the inlet to the discharge apparatus (7) at a height of at most 5 mm, in particular of 1 to 3 mm.

10. An apparatus according to claim 9, **characterised in that** the discharge apparatus (7) is a single- or multi-shaft screw conveyor (7).

11. An apparatus according to claim 9 or claim 10, **characterised in that** the vaporisation vessel (3) comprises an additional jacket (11) for passage of a heat transfer medium.

12. An apparatus according to any one of claims 9 to 11, **characterised in that** the press paddles (10) pass over the inlet to the discharge apparatus (7) at a height of at most 2 mm.
